Europäisches Patentamt

European Patent Office

Office européen des brevets

(11) Publication number: **0 149 983**
**B2**

(12) **NEW EUROPEAN PATENT SPECIFICATION**

(45) Date of publication of the new patent
specification: **16.01.91**

(21) Application number: **84830342.6**

(22) Date of filing: **17.12.84**

(51) Int. Cl.⁵: **B 60 K 20/04**

(54) **A motor vehicle provided with gearchange and handbrake-levers.**

(30) Priority: **20.01.84 IT 6705884**

(43) Date of publication of application:
**31.07.85 Bulletin 85/31**

(45) Publication of the grant of the patent:
**15.07.87 Bulletin 87/29**

(45) Mention of the opposition decision:
**16.01.91 Bulletin 91/03**

(84) Designated Contracting States:
**DE FR GB IT**

(56) References cited:
**DE-A-1 505 486**
**DE-A-1 505 498**
**US-A-3 323 609**
**US-A-4 364 450**

(73) Proprietor: **FIAT AUTO S.p.A.**
**Corso Giovanni Agnelli 200**
**I-10135 Torino (IT)**

(72) Inventor: **Brusotti, Luigi**
**Via Pianezza 178**
**I-10151 Torino (IT)**

(74) Representative: **Notaro, Giancarlo et al**
**c/o Jacobacci-Casetta & Perani S.p.A. Via Alfieri,**
**17**
**I-10121 Torino (IT)**

## Description

The present invention relates to a motor-vehicle comprising a body of stamped sheet metal provided with at least one aperture for the passage of the gear change and hand brake control levers, wherein the said levers are mounted on a stamped sheet metal elongated support frame having a substantially U-shaped cross section, which constitutes, together with these levers, a sub-assembly which is on its turn fastened below the body.

A motor vehicle of this type is known from the document DE—A—3 214 955.

In order to rationalize the assembly method and make it possible to use automated assembly systems, the present invention relates to a motor-vehicle of the above indicated type which is characterized in that the body is provided with two apertures for the passage of said two levers and in that the support frame is provided with support means for the resilient suspension of the exhaust tubing of the motor-vehicle below the said support frame.

In a preferred embodiment, the said support frame has at least two lateral hooks for the resilient suspension of the exhaust tubing from the said support frame. Moreover, the exhaust tubing suspension is preferably provided with a cradle support element having hook-shaped ends connected by elastic rings to the two lateral hooks of the support frame.

Further characteristic features and advantages of the present invention are illustrated in the following description with reference to the attached drawings, given purely by way of nonlimiting examples, in which:

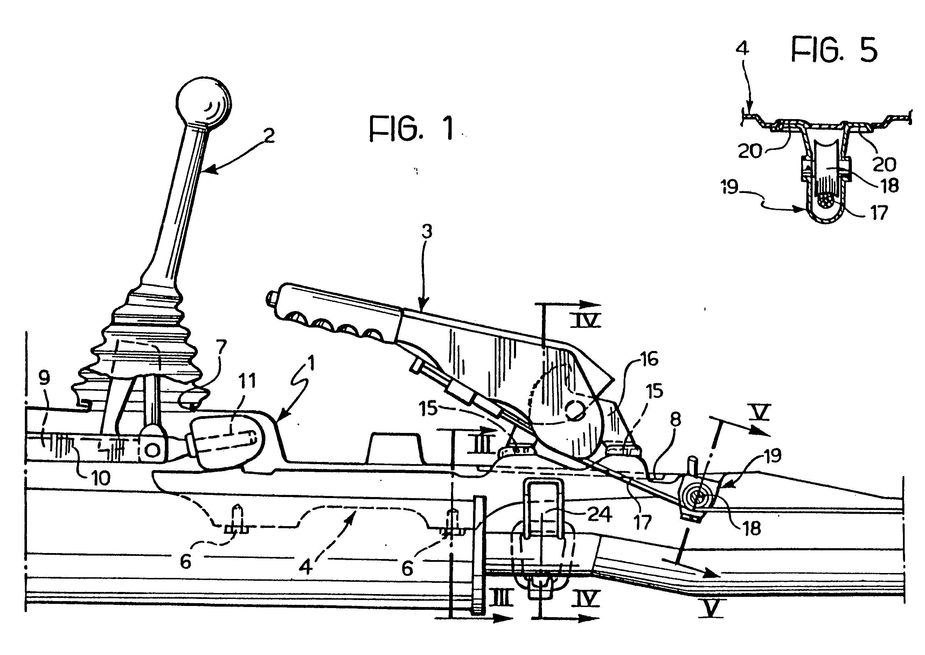

figure 1 is a cross-section of a diagram showing the gear change and hand brake levers of a motor-vehicle of the invention, when mounted on the body,

figure 2 is an exploded perspective view corresponding to figure 1,

figures 3 and 4 are cross-sections along the lines III—III and IV—IV of figure 1, and

figure 5 is a cross-section along line V—V of figure 1.

In the drawings, the reference numeral 1 indicates the overall body of a motor vehicle, on which two levers 2, 3 are mounted for gear change and hand brake purposes for the motor vehicle respectively.

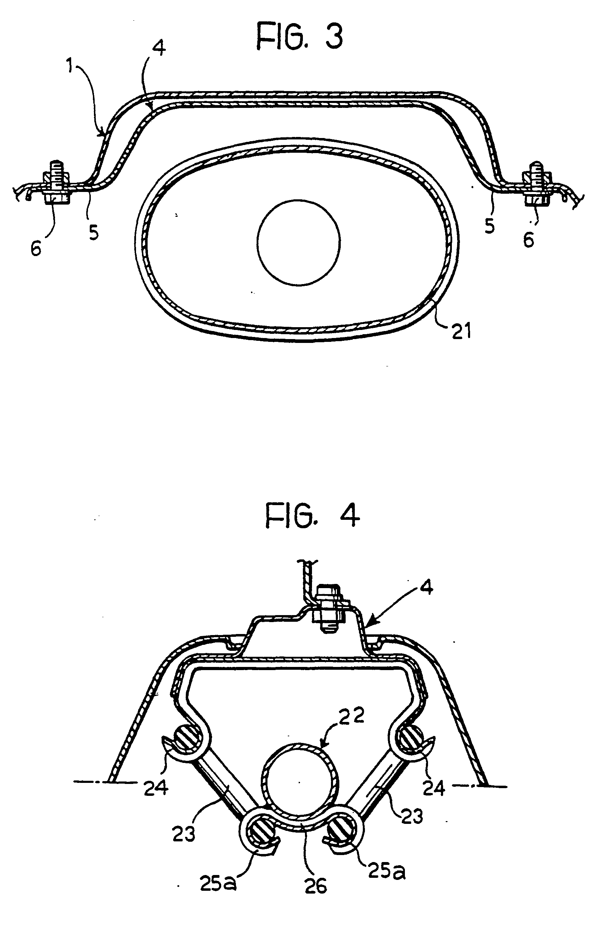

The reference numeral 4 indicates an overall support frame of stamped metal sheet, having an elongate body with a cross-section substantially in the shape of an upturned U (see also Fig. 3) on which the levers 2, 3 are mounted in order to form a sub-assembly which is then fastened to the body 1 of the motor vehicle.

In the preferred embodiment illustrated in the drawings, the support frame 4 is fastened below the body, and is provided for this purpose with lateral flanges 5 which are fastened to the body 1 by screws 6.

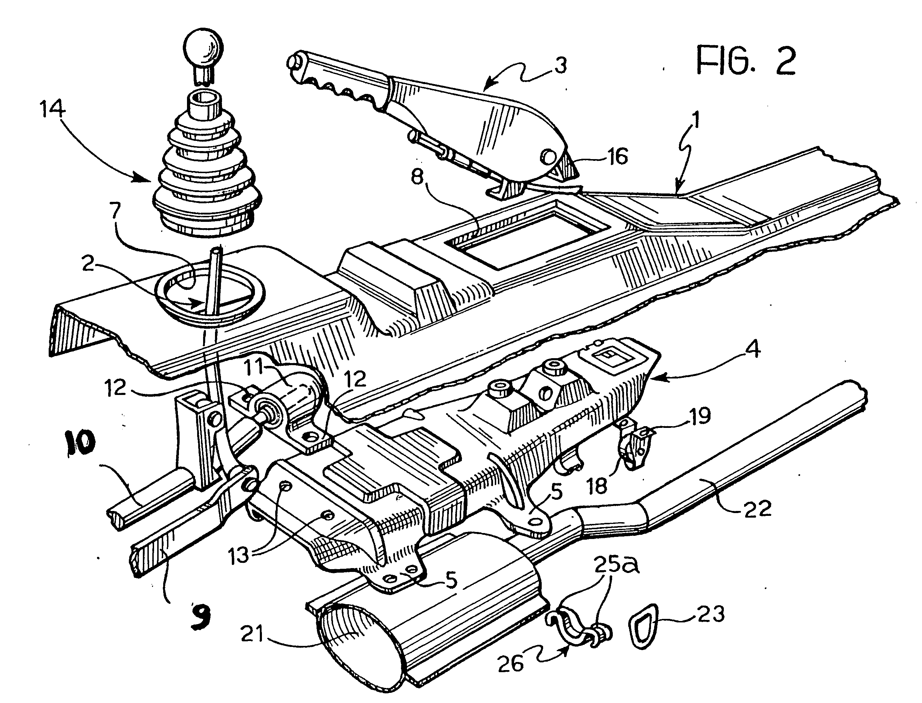

As shown in Fig. 2, the body 1 has apertures 7, 8 enabling the passage of the levers 2, 3 when the sub-assembly formed by the support frame 4 and the above-mentioned levers are brought towards the lower surface of the body 1.

In the embodiment shown in the drawings, the mechanical transmission controlling the gear change of the motor vehicle which leads to the lever 2 includes two tie rods 9, 10, of which the tie rod 9 is connected to the lower end of the control lever 2 and the tie rod 10 constitutes the support therefor. The tie rod 10 extends rearwardly (with respect to the direction of forward movement of the motor vehicle) beyond the corresponding end of the tie rod 9 and has its end portion engaged in an articulated support 11 having lateral flanges 12 which are fixed to the front portion (also with reference to the direction of forward movement of the motor vehicle) of the support frame 4 by screws 13. The reference numeral 14 indicates the normal accordion cover which protects the body of the gear change lever 2.

In the rear zone of the support frame 4 there are welded two nuts 15 which enable the screw connection of a support 16 on which the hand brake lever 3 is articulated. This lever is connected to a cable 17 for controlling the hand brake which engages a return pulley 18 which is supported in a rotary manner by a U-shaped stirrup 19 having end flanges 20 fastened to the lower surface of the support frame 4 in the rear zone of the latter (see also Fig. 5).

In the assembled condition of the motor vehicle, the support frame 4 is located in the vicinity of the exhaust silencer 21 which is disposed below this frame.

In Fig. 2, the reference numeral 22 indicates the exhaust tubing which is connected to the rear end of the silencer device 21. This exhaust tubing is suspended in a resilient manner from the support frame by a pair of resilient rings 23 (see Fig. 4) which are engaged at the top by two lateral hooks 24 of the support frame 4 and at the bottom by two hook-shaped ends 25a of a cradle support stirrup 26 on which the exhaust tubing 22 is supported.

By means of the construction described above, it is possible, on one hand, to assemble the levers 2, 3 on the body using automated screw systems and, on the other hand, to use the support frame not only for supporting the levers 2, 3 but also for the resilient suspension of the exhaust tubing and to support the return pulley for the control cable of the hand brake. As it is disposed in an intermediate position between the silencer device 21 and the body, the said support frame also acts as a shield against the heat generated by the said silencer device.

## Claims

1. A motor-vehicle comprising a body (1) of stamped sheet metal provided with at least one aperture (7, 8) for the passage of the gear change and brake control levers (2, 3), wherein the said levers (2, 3) are mounted on a stamped sheet metal elongated support frame (4) having a substantially U-shaped cross-section, which constitutes, together with these levers, a sub-assembly which is on its turn fastened below the body (1), characterized in that the body (1) is provided with two apertures (7, 8) for the passage of said two levers (1, 2) and in that the support frame (4) is provided with support means (24, 23, 26) for the resilient suspension of the exhaust tubing (22) of the motor-vehicle below the said support frame (4).

2. A motor-vehicle as claimed in claim 1, characterized in that the said support frame (4) has at least two lateral hooks (24) for the resilient suspension of the exhaust tubing (22) from the said support frame (4).

3. A motor-vehicle as claimed in claim 2, characterized in that the exhaust tubing suspension is provided with a cradle support element (26) having hook-shaped ends (25a) connected by the elastic rings (23) to the top lateral hooks (24) of the support frame.

4. A motor-vehicle as claimed in claim 1, characterized in that the said gear change lever (2) is connected to the said support frame (4) by the fastening to this support frame (4) of an element (10) forming part of the mechanical transmission (9, 10, 11) which connects the control lever (2) to the gearbox of the motor-vehicle.

5. A motor-vehicle as claimed in claim 1, characterized in that the said elongated support frame (4) is provided with a series of lateral flanges (5) which are screwed to the body of the motor-vehicle (1).

**Patentansprüche**

1. Kraftfahrzeug mit einer Karosserie (1) aus stanzgepreßtem Metallblech mit wenigstens einer Öffnung (7, 8) für den Durchtritt des Gangschalthebels (2) und des Handbremshebels (3), wobei diese Hebel (2, 3) auf einem aus stanzgepreßtem Metallblech bestehenden langgestreckten Trägerteil (4) mit im wesentlichen U-formigem Querschnitt montiert sind, das zusammen mit diesen Hebeln eine Unterbaugruppe bildet, die ihrerseits unter der Karosserie (1) befestigt ist, dadurch gekennzeichnet, daß die Karosserie (1) zwei Öffnungen (7, 8) für den Durchtritt der beiden Hebel (1, 2) aufweist und daß das Trägerteil (4) mit Haltemitteln (24, 23, 26) zur elastischen Aufhängung des Auspuffrohrs (22) des Kraftfahrzeugs unter dem Trägerteil (4) ausgestattet ist.

2. Kraftfahrzeug nach Anspruch 1, dadurch gekennzeichnet, daß das Trägerteil (4) wenigstens zwei seitliche Haken (24) für die elastische Aufhängung des Auspuffrohrs (22) an dem Trägerteil (4) besitzt.

3. Kraftfahrzeug nach Anspruch 2, dadurch gekennzeichnet, daß die Aufhängung für das Auspuffrohr ein Bügelelement (26) mit hakenförmigen Enden (25a) besitzt, die mittels elastischer Ringe (23) mit den beiden seitlichen Haken (24) des Trägerteils verbunden sind.

4. Kraftfahrzeug nach Anspruch 1, dadurch gekennzeichnet, daß der Gangschalthebel (2) dadurch mit dem Trägerteil (4) verbunden ist, daß an letzterem ein Element (10) befestigt ist, das Teil der mechanischen Übertragung (9, 10, 11) ist, die den Gangschalthebel (2) mit dem Getriebe des Kraftfahrzeugs verbindet.

5. Kraftfahrzeug nach Anspruch 1, dadurch gekennzeichnet, daß das langgestreckte Trägerteil (4) eine Reihe von seitlichen Flanschen (5) besitzt, die mit der Karosserie (1) des Kraftfahrzeugs verschraubt sind.

**Revendications**

1. Véhicule automobile comprenant une caisse (1) en tôle emboutie munie d'au moins une ouverture (7, 8) pour le passage des leviers (2, 3) de commande de la boîte de vitesses et du frein à main, dans lequel lesdits leviers (2, 3) sont montés sur un bâti support (4) allongé en tôle emboutie possédant une section transversale sensiblement en forme de U qui constitue, avec ces leviers, un sous-ensemble qui est à son tour fixé sous la caisse (1), caractérisé en ce que la caisse (1) est munie de deux ouvertures (7, 8) pour assurer le passage des deux leviers (1, 2) précités et en ce que le bâti support (4) est muni de moyens supports (24, 23, 26) pour la suspension élastique du tuyau d'échappement (22) du véhicule automobile au-dessous dudit bâti support (4).

2. Véhicule automobile selon la revendication 1, caractérisé en ce que ledit bâti support (4) possède au moins deux crochets latéraux (24) servant à suspendre élastiquement le tuyau d'échappement (22) audit bâti support (4).

3. Véhicule automobile selon la revendication 2, caractérisé en ce que la suspension du tuyau d'échappement est assurée à l'aide d'un élément support formant berceau (26) qui présente des extrémités (25a) en forme de crochet qui sont assemblées aux deux crochets latéraux (24) du bâti support par des bracelets élastiques (23).

4. Véhicule automobile selon la revendication 1, caractérisé en ce que ledit levier de changement de vitesse (2) est relié audit bâti support (4) en fixant à ce bâti support (4) un élément (10) qui fait partie de la transmission mécanique (9, 10, 11) qui relie le levier de commande (2) à la boîte de vitesses du véhicule automobile.

5. Véhicule automobile selon la revendication 1, caractérisé en ce que ledit bâti support de forme allongée (4) est muni d'une série de pattes latérales (5) qui sont vissées à la caisse du véhicule automobile (1).

EP 0 149 983 B2

FIG. 5

FIG. 1

FIG. 2

FIG. 3

FIG. 4